# EUROPÄISCHE PATENTSCHRIFT

(11) **EP 3 276 160 B1**
(45) Veröffentlichungstag und Bekanntmachung des Hinweises auf die Patenterteilung: **19.02.2020**
(21) Anmeldenummer: 17182514.4
(22) Anmeldetag: 21.07.2017
(51) Int. Cl.: F03B 11/06, F03B 11/00, F03B 13/26, F16C 19/54, F16C 33/72, F16C 33/74, F16C 33/76, F16C 17/26, F16C 33/02

(54) **LAGERMODUL ZUR VERSTELLUNG EINES ANSTELLWINKELS EINES ROTORBLATTS IN EINEM UNTERWASSERKRAFTWERK**
BEARING MODULE FOR ADJUSTING AN ANGLE OF ATTACK OF A ROTOR BLADE IN A SUBMERSIBLE POWER PLANT
MODULE DE PALIER DESTINÉ AU RÉGLAGE D'UN ANGLE D'INCIDENCE D'UNE PALE DE ROTOR DANS UNE CENTRALE ÉLECTRIQUE SOUS-MARINE

(30) Priorität: 28.07.2016 DE 102016213935
(43) Veröffentlichungstag der Anmeldung: 31.01.2018
(73) Patentinhaber: Aktiebolaget SKF, 41 550 Göteborg (SE)
(72) Erfinder: Baumann, Michael, 97503 Gädheim (DE); HOFMANN, Matthias, 97422 Schweinfurt (DE)
(74) Vertreter: Kuhstrebe, Jochen

(56) Entgegenhaltungen:
- WO-A1-2012/044771
- DE-A1-102010 019 769
- US-A- 1 837 568
- US-A- 5 660 527
- US-A1- 2010 086 409

## Beschreibung

Ausführungsbeispiele beziehen sich auf ein Lagermodul zur Verstellung eines Anstellwinkels eines Rotorblatts in einem Unterwasserkraftwerk sowie auf ein Herstellungsverfahren für ein Unterwasserkraftwerk.

Strom aus der Energie des Meeres zu gewinnen ist ein aktueller Trend. Das strömende Wasser treibt dabei Rotorblätter eines Unterwasserkraftwerkes an und erzeugt über die Rotorwelle und einem nachgeschalteten Generator Strom.

WO 2012044771 A1 offenbart ein Befestigungssystem zur Verwendung mit Windturbinenblättem mit variabler Steigung. Für jedes Windturbinenblatt, das an einer Nasenkonusstruktur einer Windturbinengondel installiert werden soll, enthält das Montagesystem eine Hochleistungslageranordnung, die mit einer sich nach außen öffnenden konischen Innenhülse versehen ist, um in einen sich verjüngenden Schaftabschnitt eines zugeordneten Windkraftanlagenblatts in einer selbsthemmenden Kupplung einzugreifen.

US 1,837,568 A offenbart eine Turbine, bei der ein Winkel der Blattoberflächen variabel bezüglich des Flusses angepasst werden kann.

DE 10 2010 019 769 A1 offenbart eine Verstelleinrichtung für eine Turbine, wobei die Turbine mit einer drehbaren Nabe und an der Nabe angebrachten und mittels der Verstelleinrichtung um ihre Längsachse verstellbaren Turbinenflügeln ausgebildet ist und die Turbinenflügel jeweils einen in der Nabe aufgenommenen Fussbereich aufweisen, an welchem die Verstelleinrichtung angreift. Zur Ausbildung der Verstelleinrichtung trägt jeder Fussbereich der Turbinenflügel ein erstes Kegelrad und die ersten Kegelräder stehen unter Zwischenschaltung mindestens eines zweiten Kegelrades miteinander in Eingriff und bilden ein Kegelradgetriebe. Des Weiteren ist ein steuerbarer Drehantrieb für den Antrieb mindestens eines der Kegelräder vorgesehen.

Einer der Bedürfnisse von Herstellern von Unterwasserkraftwerken und Gezeitenturbinen sind kompakte und hochzuverlässige Blattlager und Dichtungslösungen für Gezeitenturbinen, die in rauen Unterwasser-Umgebungen eingesetzt werden können.

Daher gibt es einen Bedarf für ein Konzept für zuverlässigere, kompaktere, und kosteneffektivere Blattlager für Unterwasserkraftwerke.

Diesem Bedarf wird durch ein Lagermodul, ein Herstellungsverfahren und ein Unterwasserkraftwerk gemäß den unabhängigen Ansprüchen entsprochen.

Ausführungsbeispiele betreffen ein Lagermodul zur rotativen Verstellung eines Rotorblattes in einem Unterwasserkraftwerk. Das Lagermodul umfasst zumindest zwei Lager zur Lagerung einer Rotorblattwelle. In zumindest manchen Ausführungsbeispielen umfasst das Lagermodul ferner die Rotorblattwelle selbst, ein Lagergehäuse sowie eine innere und äußere Dichtung gegen Wasser. Das Lagermodul weist ferner Befestigungsmittel zur Herstellung von mechanischen Verbindungen zu einer Rotorblattnabe, zu einem Rotorblatt und zu einer Blattverstellung auf. Die genannten Einzelkomponenten sind als Lagermodul zu einer kompletten Montageeinheit zusammengefasst, was eine kosten- und aufwandsgünstige Montage, Ersatz und Reparatur ermöglicht. Ferner kann durch die Zusammenfassung in einer Montageeinheit eine größere Kompaktheit und eine bessere Dichtwirkung ermöglicht werden. Die Montageeinheit kann mit einem reduzierten Zeitaufwand installiert oder ausgetauscht werden. Eine vereinfachte Reparatur kann in einem Reparaturzentrum erfolgen, und muss nicht vor Ort ausgeführt werden. Ferner kann die Herstellung des Lagermoduls von Montageexperten in einem (Staub- und Witterungs-) geschützten Umfeld erfolgen, das Lager muss nicht vor Ort zusammengesetzt werden. Die zumindest zwei Lager können eine hohe axiale sowie radiale Stabilität ermöglichen.

Ausführungsbeispiele schaffen ein Lagermodul zur Verstellung eines Anstellwinkels eines Rotorblatts in einem Unterwasserkraftwerk. Das Lagermodul umfasst zumindest zwei Lager zur Lagerung einer Rotorblattwelle. Die zumindest zwei Lager sind an der Rotorblattwelle axial voneinander auf Abstand angeordnet. Das Lagermodul umfasst ferner zumindest ein erstes Befestigungsmittel zur Herstellung einer mechanischen Verbindung zu der Rotorblattnabe. Das Lagermodul umfasst ferner zumindest ein zweites Befestigungsmittel zur Herstellung einer mechanischen Verbindung zu dem Rotorblatt. Das Lagermodul umfasst ferner zumindest ein drittes Befestigungsmittel zur Herstellung einer mechanischen Verbindung zu einer Blattverstelleinrichtung. Das Lagermodul ist zu einer Montageeinheit zusammengefasst.

Ferner umfasst das Lagermodul ein Lagergehäuse. Die mechanische Verbindung des Lagermoduls mit der Rotorblattnabe kann durch das erste Befestigungsmittel über das Lagergehäuse vorgesehen sein. Zwischen der Bohrung des Lagergehäuses und der Rotorblattwelle ist ein Zwischenraum. Hier sind in Ausführungsbeispielen die zumindest zwei Lager (Wälzlager oder Gleitlager) angeordnet.

Das Lagermodul umfasst ferner ein inneres Dichtungssystem und ein äußeres Dichtungssystem. Das innere Dichtungssystem ist radial weiter innen in Richtung der Rotationsachse der Rotorwelle angeordnet und ist beispielsweise lediglich mit Luft oder einem Gas beaufschlagt. Das äußere Dichtungssystem ist beispielsweise radial weiter außen bezüglich der Rotationsachse der Rotorwelle angeordnet. Das äußere Dichtungssystem verhindert ein Eindringen von Flüssigkeiten, etwa Meerwasser, von außen in das Lagermodul oder in die Blattnabe. Das innere Dichtungssystem hält den Schmierstoff innerhalb des Lagermoduls. Das äußere Dichtungssystem hält den Schmierstoff ebenfalls innerhalb des Lagermoduls und verhindert einen Austritt des Schmierstoffs an die umgebende Flüssigkeit, sprich Wasser.

Des Weiteren umfasst das äußere Dichtungssystem einen Dichtungsträger und in einer radialen Richtung bezüglich der Rotorblattwelle bewegliche Dichtlippen. Die Dichtlippen sind in einem Winkel zu der radialen Richtung bezüglich der Rotorblattwelle angeordnet. Die Dichtlippen laufen in radialer Richtung auf einer Laufbuchse. Ein von einem flüssigen Medium auf die Dichtlippe ausgeübter Druck ist in axialer und radialer Richtung bezüglich der Rotorblattwelle auf den Dichtungsträger übertragbar. Das äußere Dichtungssystem kann so beispielsweise einen Anpressdruck der Dichtlippen an die Laufbuchse reduzieren und einen Verschleiß reduzieren.

In zumindest manchen Ausführungsbeispielen kann eine Anordnung des Rotorblatts in radialer Richtung bezüglich einer Rotationsachse der Rotorblattnabe außerhalb der Rotorblattnabe vorgesehen sein. Eine Anordnung der Blattverstellung kann in radialer Richtung bezüglich der Rotationsachse der Rotorblattnabe innerhalb der Rotorblattnabe vorgesehen sein. Die Rotationsachse der Rotorblattnabe und die Rotationsachse der Rotorblattwelle für die Verstellung des Rotorblatts können sich in ihren Richtungen unterscheiden. Die mechanische Verbindung des Lagermoduls mit dem Rotorblatt kann durch das zweite Befestigungsmittel über die Rotorblattwelle vorgesehen sein. Die mechanische Verbindung des Lagermoduls mit der Blattverstellung kann durch das dritte Befestigungsmittel über die Rotorblattwelle vorgesehen sein. Durch eine Anordnung der Blattverstellung innerhalb der Rotorblattnabe kann ein Schutz der Blattverstellung vor äußeren Einflüssen, etwa Meerwasser und Korrosion, erreicht werden. Der Unterschied zwischen den Rotationsachsen der Rotorblattnabe und Rotorblattwelle kann eine Verstellung eines Anstellwinkels des Rotorblatts ermöglichen, um beispielsweise eine gewonnene Leistung des Unterwasserkraftwerks anzupassen.

Das Lagergehäuse ist in einigen Ausführungsbeispielen die äußere Hülle des Lagermoduls und ermöglicht die Montage des Lagermoduls als komplette Montageeinheit zur Befestigung in die Blattnabe.

In manchen Ausführungsbeispielen können die zumindest zwei Lager zumindest ein Element der Gruppe von Gleitlager und Wälzlager umfassen. Das Wälzlager kann beispielsweise auf zumindest einem Element der Gruppe von Kegelrollen, Tonnenrollen, Pendelrollen, Zylinderrollen, Nadelrollen und Kugeln basieren. Die zumindest zwei Lager können zumindest ein Festlager und zumindest ein Loslager umfassen. Die zumindest zwei Lager können ebenso einer angestellten Lagerung mittels zwei Kegelrollenlagern entsprechen. Die zumindest zwei Lager können in manchen Ausführungsbeispielen wenig Axial- und Radialspiel zulassen und ein robustes Lagersystem für Gezeitenturbinen bereitstellen. Dies ist beispielsweise besonders nützlich im Fall von stark variierenden Gezeitenströmen und Wasserturbulenzen, die für lange Ruheperioden und stark oszillierende Belastungsphasen mit kleinen Anstellwinkeln und -bewegungen sorgen. Um Biegekräfte, die auf die Nabe wirken, zu reduzieren, kann eine Kegelrollenlager-Anordnung ein steifes Design ermöglichen, das Deformationen reduziert und dadurch Leckagen des Dichtungssystems reduzieren kann.

In einigen Ausführungsbeispielen kann das äußere Dichtungssystem eine Korrosionsschutzbeschichtung aufweisen. Das Lagermodul kann ferner eine Opferanode zum Korrosions-schutz umfassen. Ein Korrosionsschutz kann eine Lebensdauer des Lagermoduls erhöhen und eine höhere Dichtwirkung bei längerem Einsatz ermöglichen.

In zumindest einigen Ausführungsbeispielen kann das Lagermodul ferner ein zustandsüberwachendes System umfassen, das ausgebildet ist, um Information über einen Wassereintritt bereitzustellen. Das Zustandsüberwachende System kann so beispielsweise über eine notwendige Wartung wegen Wassereintritts informieren, bevor die Rotorblattnabe und das Unterwasserkraftwerk Schaden nimmt.

Ausführungsbeispiele schaffen ferner ein Herstellungsverfahren für ein Unterwasserkraftwerk mit Montieren des Lagermoduls als Montageeinheit. Die Montageeinheit kann mit einem reduzierten Zeitaufwand montiert und ausgetauscht werden, und eine vereinfachte Reparatur kann in einem Reparaturzentrum erfolgen, und muss nicht vor Ort ausgeführt werden. Ferner kann die Herstellung der Montageeinheit in einem (Staub- und Witterungs-)geschützten Umfeld erfolgen, das Lager muss nicht vor Ort zusammengesetzt werden.

Ausführungsbeispiele schaffen ferner ein Unterwasserkraftwerk umfassend das Lagermodul. Das Lagermodul als Montageeinheit kann mit einem reduzierten Zeitaufwand montiert und ausgetauscht werden, und eine vereinfachte Reparatur kann in einem Reparaturzentrum erfolgen, und muss nicht vor Ort ausgeführt werden.

Die in der vorstehenden Beschreibung, den nachfolgenden Ansprüchen und den beigefügten Figuren offenbarten Ausführungsbeispiele sowie deren einzelne Merkmale können sowohl einzeln wie auch in beliebiger Kombination für die Verwirklichung eines Ausführungsbeispiels in ihren verschiedenen Ausgestaltungen von Bedeutung sein und implementiert werden. So zeigen die Figuren schematisch die nachfolgenden Ansichten.
- Fig. 1: zeigt eine schematische Überblicksdarstellung eines Lagermoduls zur Verstellung eines Anstellwinkels eines Rotorblatts in einem Unterwasserkraftwerk; und
- Fig. 2: zeigt eine weitere schematische Darstellung des Lagermoduls aus Fig. 1, wobei eine bevorzugte Ausgestaltung eines inneren Dichtungssystems und eines äußeren Dichtungssystems explizit dargestellt sind.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

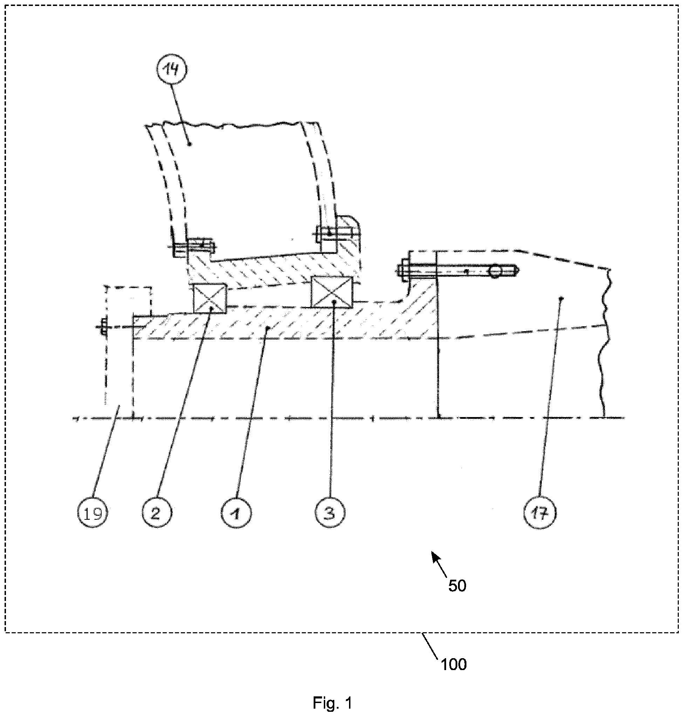

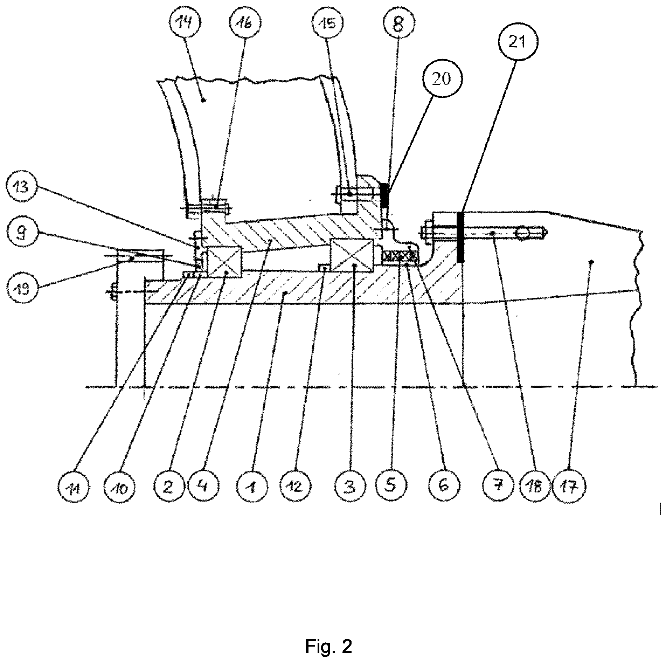

Fig. 1 zeigt der Einfachheit halber nur die Hauptkomponenten eines Unterwasserkraftwerks 100 mit einem Lagermodul 50 zur Verstellung eines Anstellwinkels eines Rotorblatts 17, während Fig. 2 detaillierter die einzelnen Komponenten darstellt. Das Lagermodul umfasst zumindest zwei Lager 2; 3 zur Lagerung einer Rotorblattwelle 1. Die zumindest zwei Lager 2; 3 sind an der Rotorblattwelle 1 axial voneinander auf Abstand angeordnet. Das Lagermodul 50 umfasst zumindest ein erstes Befestigungsmittel zur Herstellung einer mechanischen Verbindung zu einer Rotorblattnabe 14. Das Lagermodul 50 umfasst ferner zumindest ein zweites Befestigungsmittel zur Herstellung einer mechanischen Verbindung zu dem Rotorblatt 17. Das Lagermodul 50 umfasst ferner zumindest ein drittes Befestigungsmittel zur Herstellung einer mechanischen Verbindung zu einer Blattverstellung 19. Das Wasser, die Gezeiten oder die Strömung können auf das Rotorblatt 17 wirken und ein Drehmoment auf der Rotorblattnabe 14 generieren, welche mit einer Rotorwelle verbunden sein kann.

Das Lagermodul 50 ist zu einer Montageeinheit zusammengefasst. In Fig. 1 und Fig. 2 ist das erste, zweite und dritte Befestigungsmittel als Schraub- oder Bolzenverbindung ausgeführt. Alternativ kann die mechanische Verbindung einer Klebe-, Schweiß-, Schraub-, Niet-, Klemm-, Clips-, Rastverbindung und/oder dgl. entsprechen. Das erste, zweite und dritte Befestigungsmittel kann daher auch einem Kleber, einer Schweißnaht, einer Schraube, einem Bolzen, einer Niete, einem Clip, oder komplementär ausgeführten formschlüssigen Teilen der Komponenten entsprechen.

Die mechanische Verbindung durch das erste Befestigungsmittel ist, wie auch in Fig. 1 und Fig. 2 dargestellt, als äußere und innere Verbindung 15; 16 zur Rotorblattnabe 14 ausgeführt. Die mechanische Verbindung durch das zweite Befestigungsmittel ist, wie auch in Fig. 2 dargestellt, als geschraubte Rotorblattverbindung 18 zwischen Rotorblattwelle 1 und Rotorblatt 17 ausgeführt. In manchen Ausführungsbeispielen kann für eine höhere Robustheit der mechanischen Verbindung durch das zweite Befestigungsmittel, ferner eine Flanschkupplung, beispielsweise über eine Reibungsscheibe 21 genutzt werden, welche eine Reibung innerhalb der mechanischen Verbindung erhöht und damit eine höhere Kapazität zum Transfer von Last und Moment ermöglichen kann. Damit kann beispielsweise die Verbindung entlastet werden.

In einigen Ausführungsbeispielen können die zumindest zwei Lager 2; 3 zumindest ein Element der Gruppe von Gleitlager und Wälzlager umfassen. Das Wälzlager kann auf zumindest einem Element der Gruppe von Kegelrollen, Tonnenrollen, Pendelrollen, Zylinderrollen, Nadelrollen und Kugeln basieren. Die zumindest zwei Lager 2; 3 können beispielsweise zumindest ein Festlager und zumindest ein Loslager umfassen. Die zumindest zwei Lager 2; 3 können beispielsweise einer angestellten Lagerung mittels zwei Kegelrollenlagern entsprechen.

Beispielhafte Lagertypen und -anordnungen für die zumindest zwei Lager 2;3 sind beispielsweise zwei starre Kegelrollenlager in O-Anordnung, zwei starre Lager mit einem Festlager und einem Loslager (beispielsweise Zylinderrollenlager und ein gepaartes Kegelrollenlager), oder zwei flexible Lager mit einem Festlager und einem Loslager (beispielsweise zwei sphärische Rollenlager oder ein sphärisches Rolllager in Kombination mit einem kompakten, selbst-ausrichtenden Lager)
Eine vorgeladene Anordnung von Kegelrollenlager in O-Anordnung kann beispielsweise mit einem vorgegebenen (beispielsweise vorberechneten) Lager-Abstand angepasst werden, um effizient hohe Stoßkräfte und Biegemomente auszuhalten, die von dem Rotorblatt 17 über die Rotorblattwelle 1 in die Rotorblattnabe übertragen werden. Kegelrollenlager sind dabei ein bevorzugtes Ausführungsbeispiel, etwa durch ihre Fähigkeit, radiale und axiale Lasten zu tragen, ihre hohe Kompaktheit gegenüber konventionellen Drehverbindungen und Steifheit gegenüber Drehlagern, welche vorzugsweise in Blattlagern und Azimutlagern verwendet werden und eine Achsendeformation und ein Kippen von Lagern vermindern können.

In manchen Ausführungsbeispielen kann die Anordnung der zumindest zwei Lager wenig Spiel zulassen und so ein robustes Lagersystem für Gezeitenturbinen bereitstellen. Dies ist beispielsweise nützlich im Fall von stark variierenden Gezeitenströmen und Wasserturbulenzen, die für lange Ruheperioden und stark oszillierende Belastungsphasen mit kleinen Anstellwinkeln und -bewegungen sorgen können. Um Biegekräfte, die auf die Rotorblattnabe 14 wirken, zu reduzieren kann eine Kegelrollenlager-Anordnung ein steifes Design ermöglichen, das Deformationen reduziert und dadurch Leckagen des Dichtungssystems reduzieren kann. Eine vorgespannte Lageranordnung mit einer 360° Lastzone kann helfen, um eine einseitige Belastung und unerwünschte Riffelbildung zu vermeiden oder zu reduzieren. Weitere Lageranordnungen wie torusförmige Rollenlager (auch engl. CARB (toroidal roller bearing)) und doppelreihige Kegelrollenlager (auch engl. DRTRB (Double Row Tapered Roller Bearing)) oder Zylinderrollenlager (auch engl. CRB, Cylinder Roller Bearing) und DRTRB sind weitere mögliche Ausführungsbeispiele.

Die zumindest zwei Lager 2; 3 können beispielsweise Öl- oder Fettgeschmiert sein, dies kann von individuellen Anforderungen, Designs und Erfahrungen abhängen. Ölgeschmierte Lager können beispielsweise komplexere Dichtungen voraussetzen. Das Lagermodul 50 kann vor einem ersten Einsatz vorgeschmiert sein. Das Lagermodul 50 kann bei längeren Einsatzzeiten ferner ein Schmiersystem umfassen. Das Lagermodul 50 kann beispielsweise mit einem automatischen Fett-Nachschmiersystem ausgerüstet werden.

In zumindest einigen Ausführungsbeispielen ist eine Anordnung des Rotorblatts 17 in radialer Richtung bezüglich einer Rotationsachse der Rotorblattnabe 14 außerhalb der Rotorblattnabe 14. Eine Anordnung der Blattverstellung 19 kann in radialer Richtung bezüglich der Rotationsachse der Rotorblattnabe 14 innerhalb der Rotorblattnabe 14 vorgesehen sein. Die Rotationsachse der Rotorblattnabe 14 und die Rotationsachse der Rotorblattwelle 1 für die Verstellung des Rotorblatts 17 können dabei in ihren Richtungen unterscheiden sein. Beispielsweise können die Rotationsachsen der Rotorblattnabe 14 und die Rotationsachse der Rotorblattwelle 1 im Wesentlichen Orthogonal zueinander sein. Die Rotationsachsen können beispielsweise zwischen 0 und 25° von der Orthogonalität abweichen. Die mechanische Verbindung des Lagermoduls 50 mit dem Rotorblatt 17 durch das zweite Befestigungsmittel kann beispielsweise über die Rotorblattwelle 1 vorgesehen sein. Die mechanische Verbindung des Lagermoduls 50 mit der Blattverstellung 19 kann durch das dritte Befestigungsmittel über die Rotorblattwelle 1 vorgesehen sein. Die Blattverstellung 19 kann beispielsweise über ein Verstellgetriebe (Pitchantrieb), einen Nockenstößel, einen elektrischen oder hydraulischen Hubzylinder durch das dritte Befestigungsmittel mit der Rotorblattwelle 1 mechanisch verbunden werden. Die Blattverstellung 19 kann beispielsweise mittels eines geeigneten Mechanismus in Bereich zwischen 0° und 90° ausgeführt werden. Geeignet ist hierzu beispielsweise eine Verzahnung mit Großrad und antreibender Ritzelwelle, außermittiger Nocken und Verstellzylinder (hydraulisch, elektrisch), oder ein Hebelgelenk.

Fig. 2 zeigt weitere Details des Ausführungsbeispiels aus Fig. 1. Wie wiederum gezeigt, umfasst das beispielhafte Lagermodul 50 ein Innenlager 2 und ein Außenlager 3, die den zumindest zwei Lagern 2;3 entsprechen, ein Lagergehäuse 4, ein äußeres Dichtungssystem 5 zur Dichtung gegenüber Meerwasser, eine Laufbuchse 6, einen Dichtungsträger 7, eine Verbindung 8 zum Lagergehäuse 4, ein inneres Dichtungssystem 9, eine weitere Laufbuchse 10 für das innere Dichtungssystem 9, eine Wellenmutter oder Klemmring 11, eine äußere Wellenmutter oder Klemmring 12, und einen Gehäusedeckel 13.

Ferner umfasst das Lagermodul 50 das Lagergehäuse 4 und die Rotorblattwelle 1. Die mechanische Verbindung des Lagermoduls 50 mit der Rotorblattnabe 14 durch das erste Befestigungsmittel kann über das Lagergehäuse 4 vorgesehen sein. Das Lagergehäuse 4 kann dabei mit der Rotorblattwelle 1 einen Lagerzwischenraum bilden. Die zumindest zwei Lager 2; 3 können zwischen der Rotorblattwelle 1 und dem Lagergehäuse 4 angeordnet sein. Das Lagergehäuse 4 kann beispielsweise auf eine Rotationsachse der Rotorblattwelle bezogen 1 die Rotorblattwelle 1 zumindest teilweise radial umfassen und/oder ummanteln. Das Lagergehäuse kann beispielsweise eine korrosionsmindernde oder korrosionsverhindernde Schutzschicht aufweisen. In zumindest manchen Ausführungsbeispielen kann das Lagermodul 50 ferner eine Opferanode 20 umfassen, beispielsweise um eine Korrosion des Lagergehäuses oder eines Dichtungssystems zu vermindern oder zu verhindern.

Das Lagergehäuse 4 hält beide Lager, die auf der Rotorblattwelle 1 angebracht sind und das innere 9 und äußere 5 Dichtungssystem, welches an das Außenlager 3 angeflanscht sein kann. Die Lageranordnung kann ermöglichen, dass das Lagermodul 50 einfach und schnell an/von der Nabe 14t an- und abmontiert werden kann um eine Reparatur zu erleichtern. Dies kann beispielsweise durch eine Flanschverschraubung als Verbindung 15; 16 als erstes Befestigungsmittel in Kombination mit kontaktierenden zentrierenden Oberflächen geschehen. Ferner kann das Lagergehäuse 4 Hebevorrichtungen oder Hebegewinde für eine vereinfachte Kranmontage aufweisen, um den Ein- und Ausbau zu erleichtern. Zusätzlich kann das Lagergehäuse 4 beziehungsweise das Lagermodul 50 mit Sensoren zur Zustandsmessung, etwa Vibrationssensoren, etwa Temperatursensors, etwa Dehnungsmessstreifen zur Lagerüberwachung ausgestattet sein. Ferner können Sensoren (Feuchtigkeitssensoren oder Füllstandsensoren) eine Messung von eindringenden Flüssigkeiten ermöglichen.

Das Lagermodul 50 umfasst ferner ein inneres Dichtungssystem 9 und ein äußeres Dichtungssystem 5. Das innere Dichtungssystem 9 kann beispielsweise radial weiter innen bezüglich der Rotationsachse der Rotorblattnabe 14 angeordnet sein als die zumindest zwei Lager 2; 3. Das äußere Dichtungssystem 10 kann radial weiter außen bezüglich der Rotationsachse der Rotorblattnabe 14 angeordnet sein als die zumindest zwei Lager 2; 3.

In zumindest einigen Ausführungsbeispielen kann das äußere Dichtungssystem 5 eine Korrosionsschutzbeschichtung aufweisen. Das äußere Dichtungssystem 5 kann beispielsweise dazu ausgelegt sein, ein Eindringen von Meerwasser in das Lagermodul zu vermindern oder zu verhindern. Das äußere Dichtungssystem kann beispielsweise ein oder mehrere Dichtlippen aufweisen, die in radialer Richtung auf einer Laufbuchse 6 laufen und abdichten. Die Laufbuchse 6 kann beispielsweise als gehärtete Gegenlauffläche für die ein oder mehreren Dichtlippen genutzt werden, und in manchen Ausführungsbeispielen einen Korrosionsschutz aufweisen. Das äußere Dichtungssystem 5 umfasst beispielsweise einen Dichtungsträger 7 und in einer radialen Richtung bezüglich der Rotorblattwelle 1 bewegliche Dichtlippen. Die Dichtlippen können in einem Winkel zu der radialen Richtung bezüglich der Rotorblattwelle 1 angeordnet sein. Die Dichtlippen können in radialer Richtung auf einer Laufbuchse 6 laufen. Ein von einem flüssigen Medium auf die Dichtlippen ausgeübter Druck kann in axialer und radialer Richtung bezüglich der Rotorblattwelle 1 auf den Dichtungsträger 7 übertragbar sein. Der Dichtungsträger 7 kann beispielsweise über ein viertes Befestigungsmittel 8 eine mechanische Verbindung mit dem Lagergehäuse 4 aufweisen. Das vierte Befestigungsmittel kann beispielsweise eine Schraub- oder Bolzenverbindung sein.

An der Position des Innenlagers 2 in der Rotorblattnabe kann das innere Dichtungssystem 9, welche gegen eine innere Laufbuchse 10 läuft, installiert werden, beispielsweise um den Schmierstoff innerhalb des Lagersystems zu halten. Das innere Dichtungssystem 9 kann beispielsweise eine einfachere Lippendichtung sein, welche von einem Dichtungsträger gehalten wird. Als Gegenoberfläche für die Dichtungslippe kann beispielsweise eine gehärtete innere Auflage mit einer Korrosionsschutzschicht versehen werden. Das Lagergehäuse 4 und der Dichtungsträger 7, der auch mit der Rotorblattnabe 14 verbunden sein kann, kann den äußeren Ring in axialer Richtung sichern und beispielsweise ferner die innere Dichtung halten. Die axiale Sicherung des Innenrings von beiden Lagern kann beispielsweise von einer inneren Wellenmutter oder Klemmring 11 und/oder einer äußeren Wellenmutter oder Klemmring 12 und dem äußeren Dichtungssystem 5 bereitgestellt werden.

Das Lagermodul 50 kann beispielsweise als vormontierte Lagerpatrone über eine Schraubverbindung in der Rotornabe installiert werden. Die äußeren Teile, wie z.B. die Flanschverbindung zum Rotorblatt, das äußere Dichtungssystem 5 (der Hauptwasserdichtung) und das Lagergehäuse kann beispielsweise gegen korrosion geschützt sein, etwa mit einem Korrosionsschutzanstrich, einer Opferanode, oder beidem.

In manchen Ausführungsbeispielen kann das Lagermodul 50 ferner ein zustandsüberwachendes System aufweisen, das ausgebildet ist, um Information über einen Wassereintritt bereitzustellen. Dies kann beispielsweise durch Drainagebohrungen in der Konstruktion in Verbindung mit entsprechenden Druck- oder Füllstandssensoren geschehen.

Das Lagermodul 50 kann ferner ein weiteres zustandsüberwachendes System umfassen, welches beispielsweise Vibration, Geräusch und die Temperatur an beiden Lagerpositionen messen kann. Entsprechende Sensoren können beispielsweise Feuchtigkeitssensoren, Wassereintrittssensoren, Vibrationssensoren, Seismographen, Temperatursensoren, oder Geräuschsensoren sein. Ein Sensor zum Wassereintritts oder ein Feuchtigkeitssensor kann beispielsweise ebenfalls im Lagermodul 50 umfasst sein, um von außen eindringendes Wasser zu erkennen, welches in das Lager und das Lagergehäuse eindringen kann. Das Lagermodul 50 kann ferner einen Drainagetank umfassen, um das eingedrungene Wasser zu sammeln. Ferner kann das Lagermodul 50 eine Pumpe umfassen, die das eingedrungene Wasser, etwa aus dem Drainagetank, entfernt.

In manchen Ausführungsbeispielen kann das Lagermodul 50 ferner ein Sendemodul umfassen, das gemessene Daten des zustandsüberwachenden Systems und/oder des weiteren zustandsüberwachenden Systems einer Überwachungseinheit des Unterwasserkraftwerks 100 bereitstellen kann, beispielsweise über eine kabellose oder kabelgebundene Verbindung. Die Überwachungseinheit kann dann beispielsweise aufgrund der Daten über die Vibration, die Geräuschmessung, oder den Wassereintritt analysieren, ob eine Wartung oder ein Austausch geboten ist.

Das Lagermodul 50 kann beispielsweise als kompakte Blattlagereinheit für Gezeitenturbinen genutzt werden. Das Lagermodul 50 kann in zumindest einigen Ausführungsbeispielen folgende Merkmale aufweisen:
▪ Das Lagermodul 50 kann beispielsweise in verschiedenen Größen und Konfigurationen bereitgestellt werden, um in verschiedenen Turbinen Leistungsklassen eingesetzt zu werden.
▪ Gegenüber konventionellen, etwa mehrteiligen, Lösungen ist das Lagermodul Design in manchen Ausführungsbeispielen bezogen auf Kompaktheit, Steifheit und Gewicht verbessert.
▪ Das Lagermodul 50 ist in einigen Ausführungsbeispielen dazu ausgelegt, mit langen Ruheperioden und stark oszillierende Belastungsphasen mit kleinen Anstellwinkeln und Vibrationsbewegungen umzugehen. Beispielsweise kann das Lagermodul 50 dazu ausgelegt sein, eine Verstellung des Anstellwinkels in Sekundenbruchteilen zu ermöglichen.
▪ Das Lagermodul 50 kann in manchen Ausführungsbeispielen einen Kosten- und Größenvorteil gegenüber konventionellen Großwälzlagern mit größerem Durchmesser aufweisen.
▪ Das Lagermodul 50 kann beispielsweise einer vormontierten Einheit für einfache und schnelle Turbineninstallationen, Reparaturen und Austausch entsprechen. Die Montage des Lagermoduls 50 kann beispielsweise von Experten in hochsauberen Arbeitsbereichen vorgenommen werden.
▪ Der Korrosionsschutz kann in einigen Ausführungsbeispielen einen Einsatz des Lagermoduls 50 in Meerwasser ermöglichen.
▪ Die Verwendung von speziell druckfesten Dichtungssystemen kann in manchen Ausführungsbeispielen einen Einsatz des Lagermoduls 50 in bis zu 80m Tiefe ermöglichen.
▪ Das Lagermodul 50 hat in zumindest einigen Ausführungsbeispielen eine hohe Kapazität für axiale und radiale Lasten.
▪ Das Lagermodul 50 kann axial & radial spielfrei vorgespannt werden, um Vibrations- und plötzliche Lasten aufzunehmen.

Die zumindest zwei Lager 2; 3 und die Dichtungssysteme 5; 9 können in einigen Ausführungsbeispielen möglichst exakt justiert werden, um eine exzentrische Last auf Dichtungen zu verhindern oder zu reduzieren.

Ein weiteres Ausführungsbeispiel ist eine Turbine für ein Unterwasserkraftwerk 100 umfassend das Lagermodul 50. Die Turbine kann beispielsweise zumindest zwei Rotorblätter umfassen, wobei die zumindest zwei Rotorblätter über zumindest zwei Lagermodule 50 gelagert werden.

Fig. 1 illustriert ferner ein Blockdiagramm eines Ausführungsbeispiels eines Unterwasserkraftwerks 100 umfassend das Lagermodul 50. Das Unterwasserkraftwerk kann beispielsweise ein oder mehrere Turbinen umfassen, wobei die Turbinen zumindest zwei Rotorblätter mit zumindest zwei Lagermodulen 50 umfassen können.

Ausführungsbeispiele schaffen ferner ein Herstellungsverfahren für ein Unterwasserkraftwerk 100 mit Montieren des Lagermoduls 50 als Montageeinheit gemäß einem der vorhergehenden Ansprüche. Die Montage in die Rotorblattnabe 14 einer Turbine des Unterwasserkraftwerks kann beispielsweise über einen Formschluss oder Kraftschluss erfolgen, beispielsweise mittels der Schraubverbindung 15; 16.

Der Entwurf und die kontrollierte Fertigung, Montage und Test aller Komponenten kann ermöglichen, dass das Lagermodul 50 an seinem Einsatzort robuster ist als konventionelle Lösungen, was einen zuverlässigeren Betrieb ermöglichen kann.

Zumindest manche Ausführungsbeispiele können ökonomischer zu fertigen sein, da größere Gemeinsamkeiten von Komponenten von verschiedenen Einheiten bestehen können, was Skaleneffekte selbst bei individuell angepassten Einheiten ermöglichen kann

In Ausführungsbeispielen kann das Lagermodul 50 gut zugänglich und demontierbar sein, was eine einfachere und kostensenkende Wartung und Reparatur ermöglichen kann. Ein holistischer Ansatz kann eine Reparatur in Servicecentern ermöglichen, was eine zentrale Lagerhaltung von Ersatzeinheiten und -teilen ermöglichen kann.

Ausführungsbeispiele können beispielsweise auf einem holistischen Entwurfs- und Fertigungsansatz basieren. Sie können eine Kompaktheit durch intelligente Integration von Komponenten ermöglichen. Das Lagermodul 50 kann beispielsweise als schlüsselfertiges System von einem einzelnen Hersteller bereitgestellt werden. Das Lagermodul 50 kann ein einfaches Ersetzen von verschlissenen oder beschädigten Teilen ermöglichen und eine kosteneffektivere Lösung als konventionelle Systeme darstellen.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten von anderen Fachleuten abgeleitet werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 1: Rotorblattwelle
- 2: Innenlager
- 3: Außenlager
- 4: Lagergehäuse
- 5: Äußeres Dichtungssystem
- 6: Laufbuchse
- 7: Dichtungsträger
- 8: Verbindung zum Lagergehäuse
- 9: Inneres Dichtungssystem
- 10: Laufbuchse inneres Dichtungssystem
- 11: Innere Wellenmutter / Klemmring
- 12: Äußere Wellenmutter / Klemmring
- 13: Gehäusedeckel innen
- 14: Rotorblattnabe
- 15: Äußere Verbindung zur Rotorblattnabe
- 16: Innere Verbindung zur Rotorblattnabe
- 17: Rotorblatt
- 18: Rotorblattverbindung zwischen Rotorblattwelle und Rotorblatt
- 19: Blattverstellung
- 20: Opferanode
- 21: Reibungscheibe
- 50: Lagermodul
- 100: Unterwasserkraftwerk

## Patentansprüche

1. Lagermodul (50) zur Verstellung eines Anstellwinkels eines Rotorblatts (17) in einem Unterwasserkraftwerk (100), umfassend
eine Rotorblattwelle (1),
zumindest zwei Lager (2; 3) zur Lagerung der Rotorblattwelle (1), wobei die zumindest zwei Lager (2; 3) an der Rotorblattwelle (1) axial voneinander auf Abstand angeordnet sind;
ferner umfassend ein Lagergehäuse (4), wobei das Lagergehäuse (4) mit der Rotorblattwelle (1) einen Lagerzwischenraum bildet und wobei die zumindest zwei Lager (2; 3) zwischen der Rotorblattwelle (1) und dem Lagergehäuse (4) angeordnet sind
zumindest ein erstes Befestigungsmittel zur Herstellung einer mechanischen Verbindung zu einer Rotorblattnabe (14);
zumindest ein zweites Befestigungsmittel zur Herstellung einer mechanischen Verbindung zu dem Rotorblatt (17); und
zumindest ein drittes Befestigungsmittel zur Herstellung einer mechanischen Verbindung zu einer Blattverstellung (19),
ferner umfassend ein inneres Dichtungssystem (9) und ein äußeres Dichtungssystem (5), wobei das innere Dichtungssystem (9) radial weiter innen bezüglich der Rotationsachse der Rotorblattnabe (14) angeordnet ist als die zumindest zwei Lager (2; 3),
und wobei das äußere Dichtungssystem (5) radial weiter außen bezüglich der Rotationsachse der Rotorblattnabe (14) angeordnet ist als die zumindest zwei Lager (2; 3), wobei das äußere Dichtungssystem (5) einen Dichtungsträger (7) und in einer radialen Richtung bezüglich der Rotorblattwelle (1) bewegliche Dichtlippen umfasst, wobei die Dichtlippen (5) in einem Winkel zu der radialen Richtung bezüglich der Rotorblattwelle (1) angeordnet sind, und wobei die Dichtlippen (5) in radialer Richtung auf einer Laufbuchse (6) laufen, und wobei ein von einem flüssigen Medium auf die Dichtlippe ausgeübter Druck in axialer und radialer Richtung bezüglich der Rotorblattwelle (1) auf den Dichtungsträger (7) übertragbar ist, wobei das Lagermodul (50) zu einer Montageeinheit zusammengefasst ist.

2. Lagermodul (50) gemäß Anspruch 1,
wobei eine Anordnung des Rotorblatts (17) in radialer Richtung bezüglich einer Rotationsachse der Rotorblattnabe (14) außerhalb der Rotorblattnabe (14) vorgesehen ist und eine Anordnung der Blattverstellung (19) in radialer Richtung bezüglich der Rotationsachse der Rotorblattnabe (14) innerhalb der Rotorblattnabe (14) vorgesehen ist,
wobei sich die Rotationsachse der Rotorblattnabe (14) und die Rotationsachse der Rotorblattwelle (1) für die Verstellung des Rotorblatts (17) in ihren Richtungen unterscheiden,
wobei die mechanische Verbindung des Lagermoduls (50) mit dem Rotorblatt (17) durch das zweite Befestigungsmittel über die Rotorblattwelle (1) vorgesehen ist, und
wobei die mechanische Verbindung des Lagermoduls (50) mit der Blattverstellung (19) durch das dritte Befestigungsmittel über die Rotorblattwelle (1) vorgesehen ist.

3. Lagermodul (50) gemäß Anspruch 2,
wobei die mechanische Verbindung des Lagermoduls (50) mit der Rotorblattnabe (14) durch das erste Befestigungsmittel über das Lagergehäuse (4) vorgesehen ist.

4. Lagermodul (50) gemäß einem der vorhergehenden Ansprüche,
wobei die zumindest zwei Lager (2; 3) zumindest ein Element der Gruppe von Gleitlager und Wälzlager umfasst, wobei das Wälzlager auf zumindest einem Element der Gruppe von Kegelrollen, Tonnenrollen, Pendelrollen, Zylinderrollen, Nadelrollen und Kugeln basiert,
und/oder wobei die zumindest zwei Lager (2; 3) zumindest ein Festlager und zumindest ein Loslager umfassen,
und/oder wobei die zumindest zwei Lager (2; 3) einer angestellten Lagerung mittels zwei Kegelrollenlagern entsprechen.

5. Lagermodul (50) gemäß einem der vorhergehenden Ansprüche,
wobei das äußere Dichtungssystem (5) eine Korrosionsschutzbeschichtung aufweist,
oder wobei das Lagermodul (50) ferner eine Opferanode (20) zum Korrosionsschutz umfasst.

6. Lagermodul (50) gemäß einem der vorhergehenden Ansprüche,
ferner umfassend ein zustandsüberwachendes System, das ausgebildet ist, um Information über einen Wassereintritt bereitzustellen.

7. Herstellungsverfahren für ein Unterwasserkraftwerk (100) mit Montieren des Lagermoduls (50) als Montageeinheit gemäß einem der vorhergehenden Ansprüche.

8. Unterwasserkraftwerk (100) umfassend das Lagermodul (50) gemäß einem der Ansprüche 1-6.

## Claims

1. Bearing module (50) for adjusting an angle of attack of a rotor blade (17) in an underwater power plant (100), comprising
a rotor blade shaft (1),
at least two bearings (2; 3) for supporting the rotor blade shaft (1), wherein the at least two bearings (2; 3) are arranged on the rotor blade shaft (1) axially at a distance from one another; further comprising a bearing housing (4), wherein the bearing housing (4) forms a bearing interspace with the rotor blade shaft (1), and wherein the at least two bearings (2; 3) are arranged between the rotor blade shaft (1) and the bearing housing (4), at least one first fastening means for producing a mechanical connection to a rotor blade hub (14);
at least one second fastening means for producing a mechanical connection to the rotor blade (17); and at least one third fastening means for producing a mechanical connection to a blade adjuster (19), further comprising an inner sealing system (9) and an outer sealing system (5), wherein the inner sealing system (9) is arranged radially further inward with respect to the axis of rotation of the rotor blade hub (14) than the at least two bearings (2; 3),
and wherein the outer sealing system (5) is arranged radially further outward with respect to the axis of rotation of the rotor blade hub (14) than the at least two bearings (2; 3), wherein the outer sealing system (5) comprises a sealing carrier (7) and sealing lips which are movable in a radial direction with respect to the rotor blade shaft (1), wherein the sealing lips (5) are arranged at an angle to the radial direction with respect to the rotor blade shaft (1), and wherein the sealing lips (5) run in the radial direction on a running bush (6), and wherein a pressure exerted on the sealing lip by a liquid medium can be transferred to the sealing carrier (7) in the axial and radial direction with respect to the rotor blade shaft (1), wherein the bearing module (50) combines to form a mounting unit.

2. Bearing module (50) according to Claim 1,
wherein an arrangement of the rotor blade (17) in the radial direction with respect to an axis of rotation of the rotor blade hub (14) is provided outside of the rotor blade hub (14), and an arrangement of the blade adjuster (19) in the radial direction with respect to the axis of rotation of the rotor blade hub (14) is provided inside of the rotor blade hub (14),
wherein the axis of rotation of the rotor blade hub (14) and the axis of rotation of the rotor blade shaft (1) differ in their directions for the adjustment of the rotor blade (17),
wherein the mechanical connection of the bearing module (50) to the rotor blade (17) by the second fastening means is provided via the rotor blade shaft (1), and
wherein the mechanical connection of the bearing module (50) to the blade adjuster (19) by the third fastening means is provided via the rotor blade shaft (1).

3. Bearing module (50) according to Claim 2,
wherein the mechanical connection of the bearing module (50) to the rotor blade hub (14) by the first fastening means is provided via the bearing housing (4).

4. Bearing module (50) according to one of the preceding claims,
wherein the at least two bearings (2; 3) comprise at least one element from the group of sliding bearings and rolling bearings, wherein the rolling bearing is based on at least one element from the group of tapered rollers, barrel rollers, pendulum rollers, cylinder rollers, needle rollers and balls, and/or wherein the at least two bearings (2; 3) comprise at least one fixed bearing and at least one floating bearing,
and/or wherein the at least two bearings (2; 3) correspond to an adjusted bearing arrangement by means of two tapered roller bearings.

5. Bearing module (50) according to one of the preceding claims,
wherein the outer sealing system (5) has a corrosion protection coating,
or wherein the bearing module (50) further comprises a sacrificial anode (20) for corrosion protection.

6. Bearing module (50) according to one of the preceding claims,
further comprising a state-monitoring system which is designed to provide information about water ingress.

7. Method for producing an underwater power plant (100) with mounting of the bearing module (50) as a mounting unit according to one of the preceding claims.

8. Underwater power plant (100) comprising the bearing module (50) according to one of Claims 1 to 6.

## Revendications

1. Module de palier (50) destiné à régler l'angle de d'une pale de rotor (17) dans une centrale sous-marine (100), ledit module de palier comprenant un arbre de pale de rotor (1),
au moins deux paliers (2 ; 3) destinés à supporter l'arbre de pale de rotor (1), les au moins deux paliers (2 ; 3) étant disposés sur l'arbre de pale de rotor (1) axialement à distance l'un de l'autre ;
comprenant en outre un boîtier de palier (4), le boîtier de palier (4) formant avec l'arbre de pale de rotor (1) un espace de palier intermédiaire et les au moins deux paliers (2 ; 3) étant disposés entre l'arbre de pale de rotor (1) et le boîtier de palier (4),
au moins un premier moyen de fixation destiné à assurer une liaison mécanique avec un moyeu de pale de rotor (14) ;
au moins un deuxième moyen de fixation destiné à assurer une liaison mécanique avec la pale de rotor (17) ; et
au moins un troisième moyen de fixation destiné à assurer une liaison mécanique avec un moyen de réglage de pale (19),
comprenant en outre un système d'étanchéité intérieur (9) et un système d'étanchéité extérieur (5), le système d'étanchéité intérieur (9) étant disposé radialement plus vers l'intérieur par rapport à l'axe de rotation du moyeu de pale de rotor (14) que les au moins deux paliers (2 ; 3),
et le système d'étanchéité extérieur (5) étant disposé radialement plus vers l'extérieur par rapport à l'axe de rotation du moyeu de pale de rotor (14) que les au moins deux paliers (2 ; 3), le système d'étanchéité extérieur (5) comprenant un support de garniture d'étanchéité (7) et des lèvres d'étanchéité mobiles dans une direction radiale par rapport à l'arbre de pale de rotor (1), les lèvres d'étanchéité (5) étant disposées angulairement à la direction radiale par rapport à l'arbre de pale de rotor (1), et les lèvres d'étanchéité (5) circulant dans la direction radiale sur une douille de glissement (6), et la pression exercée par un milieu liquide sur la lèvre d'étanchéité dans les directions axiale et radiale par rapport à l'arbre de pale de rotor (1) pouvant être transférée au support de garniture d'étanchéité (7),
le module de palier (50) étant regroupé pour former une unité de montage.

2. Module de palier (50) selon la revendication 1,
un agencement de la pale de rotor (17) dans la direction radiale par rapport à un axe de rotation du moyeu de pale de rotor (14) étant prévu à l'extérieur du moyeu de pale de rotor (14) et un agencement du dispositif de réglage de pale (19) dans la direction radiale par rapport à l'axe de rotation du moyeu de pale de rotor (14) étant prévu à l'intérieur du moyeu de pale de rotor (14),
l'axe de rotation du moyeu de pale de rotor (14) et l'axe de rotation de l'arbre de pale de rotor (1) ayant des directions différentes pour effectuer le réglage de la pale de rotor (17),
la liaison mécanique du module de palier (50) à la pale de rotor (17) étant assurée par le deuxième moyen de fixation par le biais de l'arbre de pale de rotor (1), et
la liaison mécanique du module de palier (50) au dispositif de réglage de pale (19) étant assurée par le troisième moyen de fixation par le biais de l'arbre de pale de rotor (1).

3. Module de palier (50) selon la revendication 2,
la liaison mécanique du module de palier (50) au moyeu de pale de rotor (14) étant assurée par le premier moyen de fixation par le biais du boîtier de palier (4).

4. Module de palier (50) selon l'une des revendications précédentes,
les au moins deux paliers (2 ; 3) comprenant au moins un élément du groupe comprenant un palier lisse et un palier à roulement, le palier à roulement étant basé sur au moins l'un du groupe comprenant les rouleaux coniques, les rouleaux à tonneaux, les rouleaux à rotule, les rouleaux cylindriques, les rouleaux à aiguilles et les billes,
et/ou les au moins deux paliers (2 ; 3) comprenant au moins un palier fixe et au moins un palier libre,
et/ou les au moins deux paliers (2, 3) correspondant à un support réglé au moyen de deux paliers à rouleaux coniques.

5. Module de palier (50) selon l'une des revendications précédentes,
le système d'étanchéité extérieur (5) comportant un revêtement de protection contre la corrosion,
ou le module de palier (50) comprenant en outre une anode sacrificielle (20) destinée à la protection contre la corrosion.

6. Module de palier (50) selon l'une des revendications précédentes,
comprenant en outre un système de surveillance d'état conçu pour fournir une information sur la pénétration d'eau.

7. Procédé de fabrication d'une centrale sous-marine (100) par montage du module de palier (50) en tant qu'unité de montage selon l'une des revendications précédentes.

8. Centrale sous-marine (100) comprenant le module de pallier (50) selon l'une des revendications 1 à 6.
